(19) **Europäisches Patentamt**
**European Patent Office**
**Office européen des brevets**

(11) **EP 4 764 202 A1**

(12) **EUROPEAN PATENT APPLICATION**

(43) Date of publication:
**24.06.2026 Bulletin 2026/26**

(21) Application number: **24221487.2**

(22) Date of filing: **19.12.2024**

(51) International Patent Classification (IPC):
**F03D 7/02** $^{(2006.01)}$  **F03D 17/00** $^{(2016.01)}$

(52) Cooperative Patent Classification (CPC):
**F03D 7/028; F03D 7/0292; F03D 17/026;**
F03D 7/049; F05B 2270/20; F05B 2270/32;
F05B 2270/321; F05B 2270/332; F05B 2270/335

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Nordex Energy SE & Co. KG**
**22419 Hamburg (DE)**

(72) Inventors:
• **Steudel, Dirk**
  **22419 Hamburg (DE)**
• **TEICHMANN, Tim**
  **22419 Hamburg (DE)**

(74) Representative: **Epping - Hermann - Fischer**
**Patentanwaltsgesellschaft mbH**
**Schloßschmidstraße 5**
**80639 München (DE)**

(54) **METHOD FOR DETERMINING A WIND SECTOR DISTRIBUTION FOR A WIND TURBINE, CONTROL SYSTEM AND WIND TURBINE**

(57) A method for determining a wind sector distribution comprising a plurality of wind sectors WS_n, with n = 1, ..., N, for the operation of a wind turbine (100) a wind turbine (100) and a control system (200) are specified, the method comprising the steps (S1, S2) of providing wind condition information (I_wc) representative of average wind conditions at the location of the wind turbine (100), and performing an optimization routine (OR) for maximizing an estimated annual energy production AEP of the wind turbine (100) based on the wind condition information (I_wc) and the plurality of wind sectors WS_n, wherein the optimization routine (OR) comprises determining the plurality of wind sectors WS_n, wherein for each wind sector WS_n an effective turbulence intensity I_eff_n, based on the wind condition information and an admissible turbulence intensity I_design_n, is determined, wherein each of the admissible turbulence intensities I_design_n corresponds to a specific power mode and is based on a plurality of design parameters of the wind turbine (100), a turbulence intensity ratio TIR_n = I_eff_n/I_design_n is determined for each of the wind sectors WS_n, and the optimization routine is performed with the constraint that a weighted combination of the turbulence intensity ratio TIR_n of all wind sectors WS_n is equal to or less than 1.

FIG 2

**Description**

A method for determining a wind sector distribution is specified. The method is, in particular, related to a wind turbine and is, preferably, a method for determining a wind sector distribution for the operation of a wind turbine. Preferably, the method can be intended and configured for the determination of a wind sector distribution comprising a plurality of wind sectors, the wind sectors preferably having optimal wind sector widths and wind sector positions, on the basis of ambient conditions and turbine design parameters.

For wind turbines and, in particular, for wind farms comprising a plurality of wind turbines, the annual energy production (AEP) is a measure for determining the amount of electricity generated by the wind turbine or the wind farm over the course of a year. The AEP takes into account various factors such as the wind speed at the site, the size and efficiency of the wind turbine(s), and the operating condition of the turbine(s). Wind conditions like wind speeds and wind directions are dependent, for instance, on the natural wind conditions at a wind farm site and on effects caused by other wind turbines like wake effects, so having an individual wind sector management for each wind turbine at a wind farm site provides several benefits.

At least one object of certain embodiments is to provide a method for determining a wind sector distribution for operating a wind turbine. Further objects of certain embodiments are to provide a control system for performing the method and a wind turbine with the control system.

These objects are achieved by the method and the subject-matters according to the independent claims. Advantageous embodiments and developments are characterized in the dependent claims and are disclosed by the following description and the drawings.

According to at least one embodiment, a method for determining a wind sector distribution for operating a wind turbine is specified. Preferably, a method for determining a wind sector distribution comprising a plurality of wind sectors WS_n, with n = 1, ..., N, for the operation of a wind turbine is specified. The wind sector distribution can be defined by one or more parameters chosen from: the overall number N of wind sectors; the widths of the wind sectors, wherein all wind sectors can have the same width or the width can be different for at least two or more or all of the wind sectors; the positions of wind sectors.

According to at least one further embodiment, the method for operating a wind turbine is a computer-implemented method. In other words, a computer-implemented method is specified that can comprise one or more or all of the steps and features described herein in connection with the method for determining the wind sector distribution. Accordingly, the computer-implemented method can comprise the method for determining the wind sector distribution.

According to at least one further embodiment, a computer program product is specified, the computer program product comprising instructions which, when the computer program product is executed by a computer or computer system, cause the computer or computer system to carry out the method for determining the wind sector distribution.

According to at least one further embodiment, a control system for performing the method determining the wind sector distribution is specified. The control system or at least one or more components of the control system can for instance comprise or be part of a computer or computer system. For example, the control system can be a part of a wind turbine controller controlling the wind turbine.

According to at least one further embodiment, a wind turbine is specified that comprises the control system for performing the method or at least a part of the control system.

All features and embodiments described before and hereinafter equally apply to the method determining the wind sector distribution, the computer-implemented method, the computer program product, the control system and the wind turbine.

According to a further embodiment, the method determining the wind sector distribution comprises one or more steps of providing information. The provided information can be a wind condition information that is representative of average wind conditions at the location of the wind turbine, so that the method can comprise a step of providing wind condition information representative of average wind conditions at the location of the wind turbine.

According to a further embodiment, the control system comprises a wind condition measurement system for providing the wind condition information or at least part thereof. The wind condition measurement system can also be part of an external measurement system, i.e. a measurement system that is no component of the wind turbine. For example, the wind condition measurement system can comprise or be a met mast or at least a part of a met mast that is located at the site where the wind turbine is to be operated. Thus, the wind condition information can be provided by a met mast installed at the wind turbine site.

According to a further embodiment, the wind condition information comprises measurements of the wind conditions taken before the wind turbine is commissioned. In other words, the method can be performed before the wind turbine is operated for the first time in a normal production mode. Furthermore, it can even be possible that the wind condition information is provided before the wind turbine is built. Consequently, the wind condition information can be representative of pre-commission conditions. The wind condition information can comprise, in particular based on, measurements taken over the course of at least one month or, preferably, of at least 6 months or, even more preferably, of at least 12 months.

The wind condition information can comprise one or more or all measurements of wind conditions chosen from a wind rose, a mean wind speed distribution and a turbulence distribution. Preferably, the wind condition information comprises measurements of all the wind rose, the mean wind speed distribution and the turbulence distribution.

Furthermore, in the method for determining the wind sector distribution design parameters of the wind turbine can be taken into account. The design parameters of the wind turbine can depend on or be a power coefficient $C\_p$ and a rotor thrust coefficient $C\_t$ of the wind turbine. Additionally or alternatively, the design parameters can depend or be on admissible wind turbulences.

According to a further embodiment, the method comprises a step of performing an optimization routine for maximizing an estimated annual energy production AEP of the wind turbine based on the wind condition information and the plurality of wind sectors WS_n. Calculating the AEP based on a wind condition information and a wind sector distribution is well-known to a person skilled in the art. In the present method, the distribution of the wind sectors WS_n is the optimizing parameter. The control system can comprise an optimization unit for performing the optimization routine. The distribution of wind sectors WS_n can be varied by varying one or more of the following parameters that, at least partly, define the wind sector distribution: number N of wind sectors; widths of the wind sectors, wherein all wind sectors can have the same width, or the width can be different for at least two or more or all of the wind sectors; position of wind sectors. Consequently, an optimal wind sector distribution means that a wind sector distribution is determined for which the AEP is maximized.

According to a further embodiment, the optimization routine comprises determining the plurality of wind sectors WS_n, wherein for each wind sector WS_n an effective turbulence intensity I_eff_n is determined. Thus, a plurality of effective turbulence intensities I_eff_n, with n = 1, ..., N, is determined. The effective turbulence intensities I_eff_n are based on the wind condition information and an admissible turbulence intensity I_design_n. Thus, also a plurality of admissible turbulence intensities I_design_n, with n = 1, ..., N, is determined. Each of the admissible turbulence intensities I_design_n corresponds to a specific power mode and is based on a plurality of design parameters of the wind turbine. I_design_n represents an admissible turbulence corresponding to a specific power mode that is applied in the corresponding wind sector WS_n, and is part of the design conditions for that specific power mode. During the turbine design, it has to be ensured that the wind turbine is able to operate under design conditions at the corresponding power mode for the duration of the design lifetime. The power mode can denote the operational mode of the wind turbine and can be the standard mode or a curtailed operating condition with a reduced rated power or other deviations from the standard mode. I_design_n can be increased, for instance, by lowering the power mode, as a reduction of the power mode can reduce fatigue loads. On the other hand, a reduction of the power mode for a wind sector WS_n can also reduce the AEP.

Based on the definition in the IEC61400-1 standard, the effective turbulence intensity I_eff_n for a wind sector WS_n, wherein a position of the wind sector WS_n is defined by angles $\vartheta 1$ and $\vartheta 2$ relative to the north direction, can be given by:

$$I\_eff\_n = \left\{ \int_{\vartheta_1}^{\vartheta_2} p(\vartheta|v)[I(\vartheta|v)]^m d\vartheta \right\}^{1/m}.$$

Herein, v denotes the mean wind speed at the hub height of the wind turbine, $\vartheta$ denotes the mean wind direction at the hub height of the wind turbine, $p(\vartheta|v)$ denotes the probability density function of the wind direction $\vartheta$, $I(\vartheta|v)$ represents the turbulence intensity of the combined ambient wind and wake flows from wind direction $\vartheta$, and m is the Wöhler exponent. As the wind turbine can be assumed to comprise mainly steel, m can preferably be assumed to be 4 or approximately 4.

According to a further embodiment, the optimization routine comprises determining, for each of the wind sectors WS_n, a turbulence intensity ratio TIR_n = I_eff_n/I_design_n. In simple words, the turbulence intensity ratio relates the ambient parameters, represented by I_eff_n, to the wind turbine parameters, represented by I_design_n. In case TIR_n is smaller than 1 for a certain wind sector WS_n, I_eff_n is smaller than I_design_n, so that in regard to said wind sector WS_n no harmful loads are to be expected.

According to a further embodiment, the optimization routine is performed with the constraint that a weighted combination of the turbulence intensity ratio TIR_n of all wind sectors WS_n is equal to or less than 1. For example, the weighted combination can be a weighted sum or a weighted mean as explained further below.

According to a further embodiment, based on the wind condition information a frequency p_n is associated with each wind sector WS_n. The frequency p_n can be representative of a probability of a wind direction corresponding to the wind sector WS_n. In other words, p_n is representative of the wind blowing in a direction corresponding to the corresponding wind sector WS_n. Furthermore, each wind sector WS_n can have a wind sector width wsw_n, wherein, for each of the wind sectors WS_n, the respective wind sector width wsn_n is related to the respective frequency p_n of the corresponding wind sector WS_n and can be understood as an angular range reaching from a first limiting direction $\vartheta 1$ to an second limiting direction $\vartheta 2$, preferably with respect to the north direction. In simple words, the wind sector width wsn_n of a particular wind sector WS_n is the angular distance between the first limiting direction $\vartheta1$ and the second limiting direction $\vartheta2$ of that particular wind sector WS_n. For directly adjacent wind sectors the second limiting direction of one of said wind sectors is the first limiting direction of the other of said wind sectors.

According to a further embodiment, the admissible turbulence intensity I_design_n is varied for each of the wind sectors WS_n. I_design_n can be varied, for instance, by varying the chosen power mode for the corresponding wind sector WS_n, which also effects, as explained above, the AEP. Preferably, I_design_n can be varied without affecting I_eff_n and p_n.

According to a further embodiment, the admissible turbulence intensity I_design_n is varied for at least one sub-sector of at least one wind sector WS_n during the optimization routine, wherein the at least one sub-sector can be a curtailed sub-sector or an un-curtailed sub-sector. In other words, the wind turbine site can be divided into several wind sectors WS_n and within one or more or each wind sector WS_n there may be a presence of inconsistent wind conditions, for example caused due to wake effects from nearby wind turbines of the wind farm and/or due to an uneven terrain as well as other causes. Thus, it can be advantageous, depending on the prevailing situation, that a wind sector may be further divided into sub-sectors. A sub-sector can, in particular, be a region within a wind sector WS_n in which the wind parameter may be different from the remaining portion of the wind sector WS_n. A sub-sector is, in particular, determined during the optimization routine. The admissible turbulence intensity for a sub-sector can vary based on the wind conditions. A curtailed sub-sector can, in particular, be a region within a wind sector WS_n in which the wind turbine operates at a reduced rated power than another region within said wind sector WS_n.

According to a further embodiment, the effective turbulence intensity I_eff_n is varied for the plurality of wind sectors WS_n during the optimization routine. For example, I_eff_n can be varied for a wind sector WS_n by modifying the power mode of an upstream wind turbine in said wind sector WS_n that causes a wake effect for the wind turbine of the method described herein. Preferably, I_eff_n can be varied without affecting I_design_n and p_n.

According to a further embodiment, the frequency p_n is varied for the plurality of wind sectors WS_n during the optimization routine. For example, p_n can be varied for the wind sectors WS_n by modifying and preferably optimizing the width wsw_n of the wind sectors WS_n and/or the position of the wind sectors WS_n. This can also affect I_eff_n through a different discretization of the sectoral ambient conditions, but preferably only slightly. Furthermore, each wind sector WS_n can have a wind sector width wsw_n that is equal to or greater than a predetermined minimum wind sector width wsw_min. The predetermined minimum sector width wsw_min can be, for instance equal to or greater than 5° and equal to or less than 45°. For example, the minimum sector width wsw_min can be 10° or 20° or 30°. Thus, the number N of wind sectors can be equal to or less than a full circle divided by the minimum wind sector width, i.e. N $\leq$ 360°/wsw min.

According to a further embodiment, for each wind sector WS_n the turbulence intensity ratio TIR_n is weighted by the associated frequency p_n. This can mean, in particular, that for determining the weighted combination of the turbulence intensity ratio TIR_n of all wind sectors WS_n each turbulence intensity ratio TIR_n or a term representative for the turbulence intensity ratio TIR_n is multiplied by the associated frequency p_n.

According to a further embodiment, in the weighted combination of the turbulence intensity ratio TIR_n of all wind sectors WS_n, each turbulence intensity ratio TIR_n is set to the power of m, wherein m is the Wöhler exponent of the wind turbine. As described above, m can be 4 or approximately 4 for a wind turbine. Particularly preferably, each of the turbulence intensity ratio TIR_n set to the power of m is multiplied and, thus, weighted, by the associated frequency p_n and the weighted combination is a generalized mean of the order of m. Consequently, particularly preferably the weighted combination of the turbulence intensity ratio TIR_n of all wind sectors is given by $\left[\sum_{n=1}^{N}(TIR\_n)^m p\_n\right]^{1/m}$ with TIR_n = I_eff_n/I_design_n as described above. Preferably, the frequencies p_n, i.e. the weights of the generalized mean, sum up to 1, i.e. $\sum_{n=1}^{N} p\_n = 1$. Preferably, the optimization routine for optimizing the AEP is performed with the constraint

$$\left[\sum_{n=1}^{N}(TIR\_n)^m p\_n\right]^{1/m} \leq 1.$$

The method described herein allows the determination of the wind sector distribution preferably in terms of an optimal number N of wind sectors, optimal sector widths and optimal sector positions of the individual wind sectors WS_n. In particular, the method can preferably be based only on ambient conditions, i.e. the wind condition information, and wind turbine design parameters.

Further features, advantages and expediencies will become apparent from the following description of exemplary embodiments in conjunction with the figures.

Figure 1 shows a schematic illustration of a wind turbine with a control system according to an embodiment,
Figure 2 shows a schematic illustration of method steps of a method determining the wind sector distribution for operating a wind turbine and of a control system according to further embodiments,

Figures 3 and 4 show exemplary illustrations of wind sector distributions.

In the figures, elements of the same structure and/or functionality may be referred to by the same reference signs. It is to be understood that embodiments showing the figures are illustrative representations and are not necessarily drawn to scale.

In order to give a thorough understanding, preferred embodiments of a method for determining the wind sector distribution for operating a wind turbine, of a control system and of a wind turbine are described in the following in connection with the figures. However, the described embodiments and combinations of features are not limiting. Alternatively or additionally to the features described in connection with the figures, the embodiments shown in the figures can comprise further features described in the general part of the description. Moreover, features and embodiments of the figures can be combined with each other, even if such combination is not explicitly described.

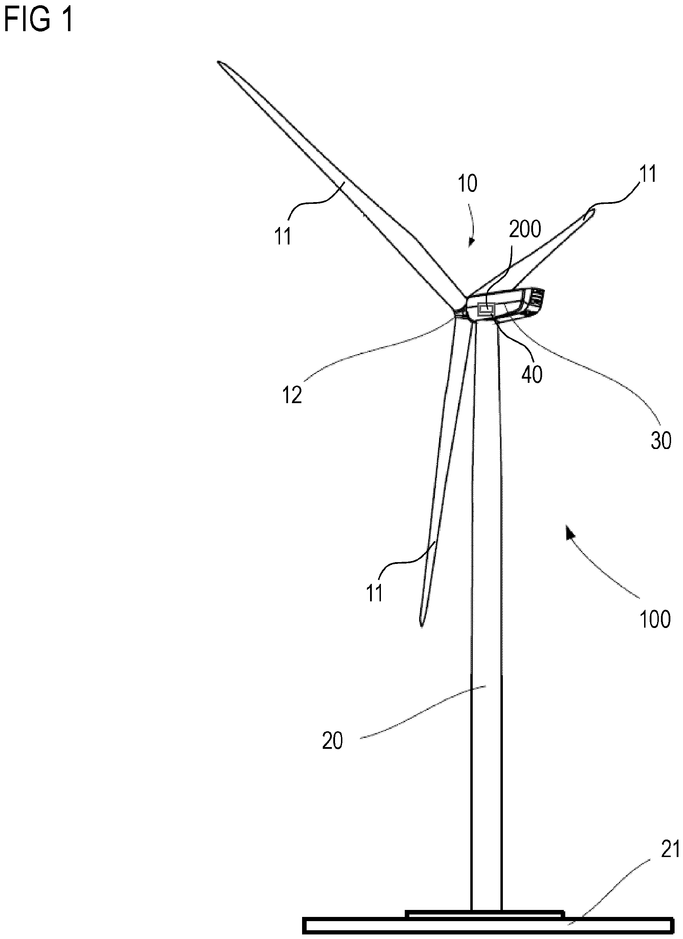

Figure 1 shows a wind turbine 100 which comprises a rotor 10 mounted to a tower 20. The tower 20 is fixed to the ground by means of a foundation 21. The rotor 20 comprises one or more rotor blades 11, which are arranged on a rotor hub 12 mounted to a nacelle 30. The nacelle 30 is rotatably mounted at one end of the tower 20 opposite to the ground. The nacelle 30 houses, for example, a generator (not shown) which is coupled to the rotor 20 via a rotor shaft and, if necessary, a gearbox (not shown).

During operation, the rotor 10 is set in rotation by an air flow, for example wind. This rotational movement is transmitted to the generator via a drive train comprising, inter alia, the rotor shaft and, if necessary, the gearbox. The generator converts the mechanical energy of the rotor 2 into electrical energy.

For optimizing the energy output of the wind turbine 100, the nacelle 30 with the rotor 10 has to be rotated into the wind, this the angular position of the nacelle 30 with the rotor 10 depends on the wind direction. Moreover, the pitch angles of the rotor blades 11 have to be set according to the wind speed. Both adjustments are done with the help of drives (not shown) which rotate the rotor blades 11 and the nacelle 30 with the rotor 10 to a respective target position. In order to control and operate the drives, the wind turbine 100 comprises a wind turbine controller 40 comprising a drive control system which determines operating setpoints with which the drives are operated. As indicated in Figure 1, the wind turbine controller 40 can be located in the nacelle 30.

For an operator of a wind turbine or, in particular, of a wind farm comprising a plurality of wind turbines, the annual energy production (AEP) is important, since the AEP is an important factor for determining the rentability of the wind turbine or the wind farm. Thus, the AEP that depends on the wind conditions at the site of each wind turbine of a wind farm site should be maximized. Thus, a wind sector management is needed for each wind turbine of a wind farm so that the AEP can be optimized. The wind sector distribution can be defined by one or more parameters chosen from: an overall number of wind sectors; widths of the wind sectors, wherein all wind sectors can have the same width or the width can be different for at least two or more or all of the wind sectors; positions of wind sectors.

In the following, a method for determining a wind sector distribution for operating a wind turbine is described. In order to execute the method, the wind turbine 100 comprises a control system 200 that can at least partly be part of the wind turbine controller 40 as indicated in Figure 1 or that can be a separate control system. The control system 200 is also described in the following. In particular, the control system 200 is configured for performing the method steps of the method determining the wind sector distribution for operating the wind turbine 100. Components of the control system 200 that are described in the following can be specifically configured to perform the associated method step or can be part of one or more other control systems that can also perform method steps of other methods for operating the wind turbine. In particular, the method determining the wind sector distribution for operating the wind turbine can be a computer-implemented method or can be a part of the computer-implemented method. Consequently, the computer-implemented method can comprise or be the method for determining the wind sector distribution as described in the following. Moreover, the computer-implemented method can be implemented in a computer program product, so that the computer program product comprises instructions which, when the computer program product is executed by a computer or computer system, cause the computer or computer system to carry out the method for operating the wind turbine. Features and embodiments referring to the method for determining the wind sector distribution for operating the wind turbine also apply to the computer-implemented method and to the computer program product. Thus, figures showing the method or method steps are also representations of the computer-implemented method and of the computer program product.

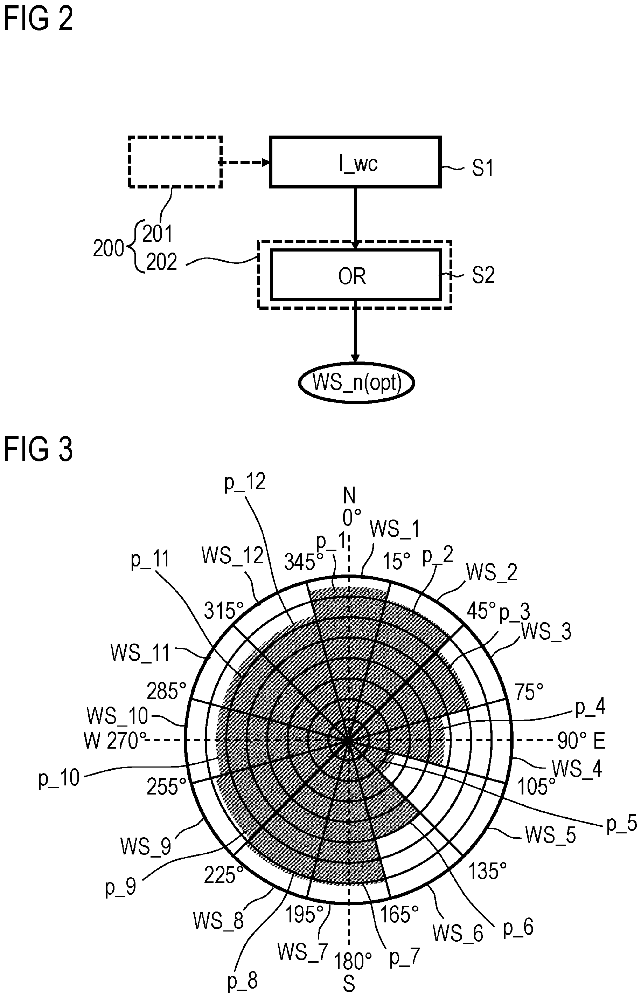

Figure 2 shows method steps of a method for determining a wind sector distribution. The wind sector distribution comprises a plurality of N wind sectors WS_n with n = 1, ..., N. The method can be carried out, preferably, by the control system 200 as shown in Figure 1 and indicated in Figure 2. After having carried out the method, the control system 200 can provide the wind sector distribution to other control systems of the wind turbine 100. It can also be possible that not all parts of the control system 200 are part of the wind turbine 100.

In a first step S1 of the method, wind condition information I_wc representative of average wind conditions at the location of the wind turbine 100 is provided. The control system 200 can comprise a wind condition measurement system 201 for providing the wind condition information I_wc as indicated in Figure 2. The wind condition measurement system 201 can be part of a measurement system situated in the wind turbine 100. Alternatively, the wind condition measurement system 201 can also be part of a measurement system that is not a part of the wind turbine 100. For example, the wind condition measurement system 201 can comprise or be a met mast or can be at least a part of a met mast 1 that is located at the site where the wind turbine 100 is to be operated.

The wind condition information I_wc comprises measurements of the wind conditions taken before the wind turbine 100 is commissioned, so that the wind condition information I_wc can be representative of pre-commission conditions. Consequently, the method described herein can be performed before the wind turbine 100 is operated for the first time in a normal production mode. However, it can even be possible that the wind condition information I_wc is provided before the wind turbine 100 is built. The wind condition information I_wc can be based on measurements taken over the course of at least one month or, preferably, of at least 6 months or, even more preferably, of at least 12 months. The wind condition information I_wc comprise one or more or preferably all measurements of wind conditions chosen from a wind rose, a mean wind speed distribution and a turbulence distribution.

The method further comprises a step S2 of performing an optimization routine OR for maximizing the estimated annual energy production AEP of the wind turbine 100 based on the wind condition information I_wc and the plurality of wind sectors WS_n, wherein the distribution of the wind sectors WS_n is the optimizing parameter. The result of the optimization routine OR is, as indicated in Figure 2, the determined optimal wind sector distribution with a plurality of optimized wind sectors WS_n(opt) for which the AEP is maximized. In short, an optimal wind sector distribution means that the wind sector distribution is such that the AEP is maximized. The calculation of the AEP based on wind condition information and wind sector distributions is well-known to a person skilled in the art.

The control system 200 comprises an optimization unit 202 for performing the optimization routine OR as indicated in Figure 2. The distribution of wind sectors WS_n can be varied by directly or indirectly varying one or more of the following parameters to define the wind sector distribution: number N of wind sectors; widths of the wind sectors, wherein all wind sectors can have the same width or the width can be different for at least two or more or all of the wind sectors; position of wind sectors.

In the optimization routine OR for each wind sector WS_n an effective turbulence intensity I_eff_n is determined, so that a plurality of effective turbulence intensities I_eff_n, with n = 1, ..., N, is determined. The effective turbulence intensity I_eff_n for each of the wind sectors WS_n is based on the wind condition information I_wc and an admissible turbulence intensity I_design_n, so that a plurality of admissible turbulence intensities I_design_n, with n = 1, ..., N, is determined. I_eff_n can be determined using the IEC61400-1 standard as described in the general part.

Each of the admissible turbulence intensities I_design_n corresponds to a specific power mode and is based on a plurality of design parameters of the wind turbine 100. The design parameters of the wind turbine can preferably depend on a power coefficient C_p and a rotor thrust coefficient C_t of the wind turbine 100. Moreover, the design parameters can also depend on admissible wind turbulences. I_design_n represents an admissible turbulence corresponding to a specific power mode that is applied in the corresponding wind sector WS_n, and is part of the design conditions for that specific power mode. During the wind turbine design, it has to be ensured that the wind turbine is able to operate under design conditions at the corresponding power mode for the duration of the design lifetime.

The power mode can denote the operational mode of the wind turbine and can be the standard mode or a curtailed operating condition with a reduced rated power or other deviations from the standard mode. I_design_n can be increased, for instance, by lowering the power mode, as a reduction of the power mode can reduce fatigue loads. On the other hand, a reduction of the power mode for a wind sector WS_n can also reduce the AEP.

The optimization routine OR further comprises determining, for each of the wind sectors WS_n, a turbulence intensity ratio TIR_n = I_eff_n/I_design_n, so that the turbulence intensity ratio gives a ratio between the ambient parameters, represented by I_eff_n, and the wind turbine parameters, represented by I_design_n. The optimization routine OR is performed with the constraint that a weighted combination of the turbulence intensity ratio TIR_n of all wind sectors WS_n is equal to or less than 1. For example, the weighted combination can be a weighted sum or a weighted mean.

In particular, a frequency p_n that is based on the wind condition information I_wc is provided as the respective weighting factor for each of the ratios TIR_n. The frequency p_n can, in particular, be representative of a probability of a wind direction corresponding to the wind sector WS_n. Thus, p_n is representative of the occurrence of a wind direction in the corresponding wind sector WS_n.

Each wind sector WS_n has a wind sector position and a wind sector width wsw_n, wherein, for each of the wind sectors WS_n, the respective wind sector width wsn_n can be understood as an angular range reaching from a first limiting direction $\vartheta$1 to a second limiting direction $\vartheta$2, preferably with respect to the north direction. In simple words, the wind sector width wsn_n of a particular wind sector WS_n is the angular distance between the first limiting direction $\vartheta$1 and the second limiting direction $\vartheta$2 of that particular wind sector WS_n. For directly adjacent wind sectors, the second limiting direction of one of said wind sectors is the first limiting direction of the other of said wind sectors. The wind sector position of each wind sector can be the mean direction of the wind sector, i.e. the middle between the first limiting direction and the second limiting direction.

Figure 3 shows an example for a wind sector distribution having, by way of example only, twelve wind sectors WS_1, ..., WS_12, each of the wind sectors WS_1, ..., WS_12 having a respective wind sector width wsw_1, ..., wsw_12 of 30°. For example, wind sector WS_1 has a mean direction pointing in north direction, denoted as N, wherein the north direction defines a direction of 0°, so that wind sector WS_1 is defined from $\vartheta 1$ = -15° or 345° to $\vartheta 2$ = +15°. Wind sector WS_2 starts from $\vartheta 1$ = 15° to $\vartheta 2$ = 45° and has a mean direction point in a direction with an angle of 30° relative to the north direction, and so on. Consequently, wind sector WS_4 has a mean direction pointing in east direction, denoted as E, wind sector WS_7 has a mean direction pointing in south direction, denoted as S, and wind sector WS_10 has a mean direction pointing in west direction, denoted as W. The wind sector widths wsw_n can also be smaller or larger than 30°. In particular, the wind sector widths wsw_n can, for instance, be 10° or 20°. Furthermore, at least two or more or all wind sectors WS_1, ..., WS_12 can also have different wind sector widths.

The shaded areas in each wind sector WS_1, ..., WS_12 illustrate the corresponding frequencies p_1, ..., p_12, i.e. the probabilities that a wind occurs with a wind direction in the wind sectors WS_1, ..., WS_12. In particular, the sizes of the shaded areas together with the scale indicated by the concentric circles indicate the value of the probabilities p_1, ..., p_12. For example, the circles can represent probabilities of 10%, 20%, 30% and so on, so that wind sector WS_1 has a probability, i.e. a frequency p_1, of about 75%.

As described above, for each wind sector WS_n the turbulence intensity ratio TIR_n is weighted by the associated frequency p_n. Accordingly, for determining the weighted combination of the turbulence intensity ratio TIR_n of all wind sectors WS_n each turbulence intensity ratio TIR_n or a funtion representative for the turbulence intensity ratio TIR_n is multiplied by the associated frequency p_n.

Preferably, in the weighted combination of the turbulence intensity ratio TIR_n of all wind sectors WS_n, each turbulence intensity ratio TIR_n is set to the power of m, wherein m is the Wöhler exponent of the wind turbine. As described above, m can be 4 or approximately 4. Particularly preferably, each of the turbulence intensity ratio TIR_n set to the power of m is multiplied and, thus, weighted, by the associated frequency p_n and the weighted combination is a generalized mean of the order of m. Particularly preferably, the weighted combination of the turbulence intensity ratio TIR_n of all wind sectors is given by $\left[\sum_{n=1}^{N}(TIR\_n)^m p\_n\right]^{1/m}$ with TIR_n = I_eff_n/I_design_n as described above. Preferably, the frequencies p_n, i.e. the weights of the generalized mean, sum up to 1, i.e. $\sum_{n=1}^{N} p\_n = 1$. Accordingly, the optimization routine for optimizing the AEP is preferably performed with the constraint

$$\left[\sum_{n=1}^{N}(TIR\_n)^m p\_n\right]^{1/m} \leq 1.$$

The frequencies p_n of the wind sectors WS_n can be varied for the plurality of wind sectors WS_n during the optimization routine OR. For example, p_n can be varied by modifying and preferably optimizing the widths wsw_n of the wind sectors WS_n as well as the position of the wind sectors WS_n. For example, the number N of wind sectors WS_n can be kept constant and the individual wind sectors widths wsn_n can be varied, so that the wind sectors WS_n can have different widths. Furthermore, it can be possible that the number N of wind sectors WS_n is varied. This can be done with the wind sectors WS_n having the same or different wind sector widths wsw_n. In any case, each wind sector WS_n can have a wind sector width wsw_n that is equal to or greater than a predetermined minimum wind sector width wsw_min. The predetermined minimum sector width wsw_min can be, for instance equal to or greater than 5° and equal to or less than 45°. For example, the minimum sector width wsw_min can be 10° or 20° or 30°. Thus, the number N of wind sectors can be equal to or less than a full circle divided by the minimum wind sector width, i.e. N $\leq$ 360°/wsw_min.

Furthermore, the effective turbulence intensity I_eff_n can be varied for the plurality of wind sectors WS_n during the optimization routine OR. For example, I_eff_n can be varied for a wind sector WS_n by modifying the power mode of an upstream wind turbine in said wind sector WS_n that causes a wake effect for the wind turbine of the method described herein. Preferably, I_eff_n can be varied without affecting I_design_n and p_n.

Furthermore, the admissible turbulence intensity I_design_n can be varied for each of the wind sectors WS_n. I_design_n can be varied, for instance, by varying the chosen power mode for the corresponding wind sector WS_n. Preferably, I_design_n can be varied without affecting I_eff_n and p_n.

Furthermore, the admissible turbulence intensity I_design_n can be varied for at least one sub-sector of at least one wind sector WS_n during the optimization routine, wherein the at least one sub-sector can be a curtailed sub-sector or an un-curtailed sub-sector. As described above, the wind turbine site can be divided into several wind sectors WS_n and within one or more or each wind sector WS_n there may be a presence of inconsistent wind conditions, for example caused due to wake effects from nearby wind turbines of the wind farm and/or due to an uneven terrain as well as other causes. Thus, it can be advantageous, depending on the prevailing situation, that a wind sector WS_n may be further divided into two or more sub-sectors. A sub-sector can, in particular, be a region within a wind sector WS_n in which the wind condition information I_wc may be significantly different from the remaining portion of the wind sector WS_n. A sub sector is, in particular, determined during the optimization routine OR. The admissible turbulence intensity I_desgin_n for a sub-sector can vary from the admissible turbulence intensity I_desgin_n of the rest of that wind sector based on the wind conditions. A curtailed sub-sector can, in particular, be a region within a wind sector WS_n in which the wind turbine operates at a reduced rated power than another region within said wind sector WS_n.

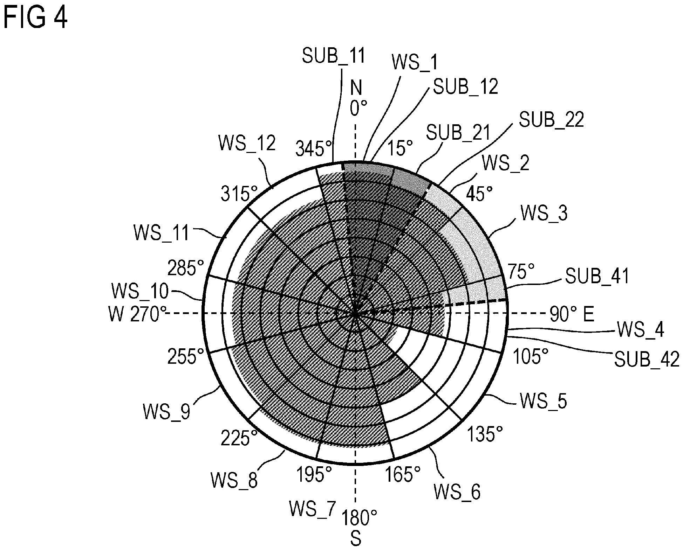

Figure 4 shows an example for a wind sector distribution similar to the wind sector distribution shown in Figure 3. However, by way of example only, within wind sectors WS_1 and WS_2 there is a subregion, indicated by a darkened region, in which different wind conditions are prevailing, for instance a significantly higher mean wind speed, which can be caused, for instance, by wake effects from an adjacent wind turbine. Thus, it can be advantageous to divide wind sector WS_1 into sub-sectors SUB_11 and SUB_12 and wind sector WS_2 into sub-sectors SUB_21 and SUB_22. Sub-sectors SUB_12 and SUB_21 can be curtailed sub-sectors, whereas sub-sector SUB_11 can be uncurtailed. Furthermore, within wind sectors WS_2, WS_3 and WS_4 there can be a further subregion, indicated by a less-darkened region, in which also different wind conditions are prevailing. Correspondingly, wind sector WS_4 is also divided in two sub-sectors SUB_41 and SUB_42. Subsectors SUB_22 and SUB_41 can also be curtailed sub-sectors, wherein the curtailment of sub-sectors SUB_22 can be different from the curtailment of sub-sector SUB_21. Sub-sector SUB_42 can be uncurtailed as compared to sub-sector SUB_41.

It is to be noted that the number of sub-sectors can be different in each wind sector WS_n. In can also be possible that one or more wind sectors WS_n have more than two sub-sectors, whereas some wind sectors may have only one curtailed sub-sector as shown in Figure 4, and some wind sectors WS_n may have only one mean wind speed as wind sectors WS_3 and WS_5 to WS_12 in the shown example.

Furthermore, it is emphasized that the wind sector distributions shown in Figures 3 and 4 are mere example for illustrative purposes of the underlying principles.

The invention is not restricted by the description on the basis of the exemplary embodiments. Rather, the invention encompasses any new feature and also any combination of features, which in particular comprises any combination of features in the patent claims, even if this feature or this combination itself is not explicitly specified in the patent claims or exemplary embodiments.

Reference signs

| | |
|---|---|
| 10 | rotor |
| 11 | rotor blade |
| 12 | rotor hub |
| 20 | tower |
| 21 | foundation |
| 30 | nacelle |
| 40 | wind turbine controller |
| 100 | wind turbine |
| 200 | control system |
| 201 | wind condition measurement system |
| 202 | optimization unit |
| I_wc | wind condition information |
| OR | optimization routine |
| p_n | frequency |
| S1, S2 | method step |
| SUB_11, SUB_12, SUB_21, SUB_22, SUB_41, SUB_42 | sub-sector |
| WS_n, WS_1, ... ,WS_12 | wind sector |
| WS_n(opt) | optimized wind sector |

**Claims**

1.  A method for determining a wind sector distribution comprising a plurality of wind sectors WS_n, with n = 1, ..., N, for the operation of a wind turbine (100), the method comprising the steps (S1, S2):

    - providing wind condition information (I_wc) representative of average wind conditions at the location of the wind turbine (100),
    - performing an optimization routine (OR) for maximizing an estimated annual energy production AEP of the wind turbine (100) based on the wind condition information (I_wc) and the plurality of wind sectors WS_n, wherein

- the optimization routine (OR) comprises determining the plurality of wind sectors WS_n, wherein for each wind sector WS_n an effective turbulence intensity I_eff_n, based on the wind condition information and an admissible turbulence intensity I_design_n, is determined, wherein each of the admissible turbulence intensities I_design_n corresponds to a specific power mode and is based on a plurality of design parameters of the wind turbine (100),
- a turbulence intensity ratio TIR_n = I_eff_n/I_design_n is determined for each of the wind sectors WS_n,
- the optimization routine is performed with the constraint that a weighted combination of the turbulence intensity ratio TIR_n of all wind sectors WS_n is equal to or less than 1.

2. The method according to claim 1, wherein the admissible turbulence intensity I_design_n is varied for a sub-sector (SUB_11, SUB_12, SUB_21, SUB_22, SUB_41, SUB_42) of a wind sector WS_n during the optimization routine (OR), wherein the sub-sector (SUB_11, SUB_12, SUB_21, SUB_22, SUB_41, SUB_42) is a curtailed sub-sector or an un-curtailed sub-sector.

3. The method according to any one of the preceding claims, wherein the effective turbulence intensity I_eff_n is varied for the plurality of wind sectors WS_n during the optimization routine (OR).

4. The method according to any one of the preceding claims, wherein, based on the wind condition information (I_wc), a frequency p_n is associated with each wind sector WS_n, the frequency p_n being representative of a probability of a wind direction corresponding to the wind sector WS_n.

5. The method according to claim 4, wherein the frequency p_n is varied for the plurality of wind sectors WS_n during the optimization routine (OR).

6. The method according to claim 4 or 5, wherein for each wind sector WS_n the turbulence intensity ratio TIR_n is weighted by the associated frequency p_n.

7. The method according to any one of the claims 4 to 6, wherein in the weighted combination of the turbulence intensity ratio TIR_n of all wind sectors WS_n each turbulence intensity ratio TIR_n is set to the power of m, wherein m is the Wöhler exponent of the wind turbine.

8. The method according to any one of the claims 4 to 7, wherein the weighted combination of the turbulence intensity ratio TIR_n of all wind sectors is given by $\left[\sum_{n=1}^{N}(TIR\_n)^m p\_n\right]^{1/m}$ .

9. The method according to any one of the preceding claims, wherein each wind sector WS_n has a wind sector width wsw_n that is equal to or greater than a predetermined minimum wind sector width wsw_min.

10. The method according to any one of the preceding claims, wherein the wind condition information (I_wc) comprises measurements of the wind conditions taken before the wind turbine (100) is commissioned.

11. The method according to claim 10, wherein the wind condition information (I_wc) comprises measurements taken over the course of at least 6 months.

12. The method according to any one of the preceding claims, wherein the wind condition information (I_wc) comprises one or more measurements of wind conditions chosen from a wind rose, a mean wind speed distribution, a turbulence distribution.

13. The method according to any one of the preceding claims, wherein the design parameters of the wind turbine (100) depend on a power coefficient C_p and a rotor thrust coefficient C_t.

14. A control system (200) performing the method according to any one of the preceding claims, comprising

- a wind condition measurement system (201) for providing the wind condition information (I_wc) and
- an optimization unit (202) for performing the optimization routine (OR).

15. Wind turbine (100), comprising a control system (200) according to claim 14 or at least a part of thereof.

FIG 1

FIG 2

FIG 3

FIG 4

# EUROPEAN SEARCH REPORT

Application Number

EP 24 22 1487

## DOCUMENTS CONSIDERED TO BE RELEVANT

| Category | Citation of document with indication, where appropriate, of relevant passages | Relevant to claim |
|---|---|---|
| X | EP 3 540 214 A1 (BEIJING GOLDWIND SCIENCE & CREATION WINDPOWER EQUIPMENT CO LTD [CN]) 18 September 2019 (2019-09-18) * paragraphs [0016] - [0051]; figure 1 * ----- | 1-15 |
| X | CN 107 654 336 A (CRRC WIND POWER SHANDONG CO LTD) 2 February 2018 (2018-02-02) | 15 |
| A | * the whole document * ----- | 1-14 |
| X | CN 113 586 336 B (SHANGHAI ELECTRIC WIND POWER GROUP CO LTD) 25 November 2022 (2022-11-25) | 15 |
| A | * the whole document * ----- | 1-14 |

**CLASSIFICATION OF THE APPLICATION (IPC)**

INV.
F03D7/02
F03D17/00

**TECHNICAL FIELDS SEARCHED (IPC)**

F03D

The present search report has been drawn up for all claims

| Place of search | Date of completion of the search | Examiner |
|---|---|---|
| The Hague | 23 May 2025 | Libeaut, Laurent |

EPO FORM 1503 03.82 (P04C01)

## ANNEX TO THE EUROPEAN SEARCH REPORT
## ON EUROPEAN PATENT APPLICATION NO.

EP 24 22 1487

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| EP 3540214 | A1 | 18-09-2019 | AU | 2018334593 A1 | 15-08-2019 |
| | | | CN | 110094297 A | 06-08-2019 |
| | | | EP | 3540214 A1 | 18-09-2019 |
| | | | US | 2021340955 A1 | 04-11-2021 |
| | | | WO | 2019148772 A1 | 08-08-2019 |
| CN 107654336 | A | 02-02-2018 | NONE | | |
| CN 113586336 | B | 25-11-2022 | NONE | | |

EPO FORM P0459

For more details about this annex : see Official Journal of the European Patent Office, No. 12/82